# EUROPÄISCHE PATENTSCHRIFT

(11) **EP 4 522 374 B1**
(45) Veröffentlichungstag und Bekanntmachung des Hinweises auf die Patenterteilung: **06.08.2025**
(21) Anmeldenummer: 24725474.1
(22) Anmeldetag: 08.05.2024
(51) Int. Cl.: B23K 26/00, B41J 2/44, B41J 2/475, B41M 5/00, C03C 17/00

(54) **LASERTRANSFERDRUCKVORRICHTUNG UND DEREN VERWENDUNG SOWIE VERFAHREN ZUM BESCHICHTEN EINER GLASTAFEL MITTELS LASERTRANSFERDRUCK**
LASER TRANSFER PRINTING DEVICE AND USE THEREOF AS WELL AS METHOD FOR COATING A GLASS PANE BY WAY OF LASER TRANSFER PRINTING
DISPOSITIF D'IMPRESSION PAR TRANSFERT LASER ET SON UTILISATION AINSI QUE PROCÉDÉ DE REVÊTEMENT D'UN PANNEAU DE VERRE AU MOYEN D'UNE IMPRESSION PAR TRANSFERT LASER

(30) Priorität: 13.06.2023 DE 102023205505
(43) Veröffentlichungstag der Anmeldung: 19.03.2025
(73) Patentinhaber: HEGLA boraident GmbH & Co. KG, 37688 Beverungen (DE)
(72) Erfinder: RAINER, Thomas, 37688 Beverungen (DE)
(74) Vertreter: Dr. Solf & Zapf Patent- und Rechtsanwalts PartG mbB
(86) Internationale Anmeldenummer: PCT/EP2024/062815
(87) Internationale Veröffentlichungsnummer: WO 2024/256094

(56) Entgegenhaltungen:
- DE-B3- 102021 215 023
- US-A1- 2021 107 828

## Beschreibung

Die vorliegende Erfindung betrifft eine Lasertransferdruckvorrichtung zum Beschichten einer Objektoberfläche, vorzugsweise einer Glasoberfläche, oder einer Keramikoberfläche, oder einer Metalloberfläche, bevorzugt einer Glastafeloberfläche, mittels Lasertransferdruck, sowie deren Verwendung und ein Verfahren zum Beschichten einer Glastafel mittels Lasertransferdruck.

Vorzugsweise dient die Lasertransferdruckvorrichtung zum Erzeugen einer Struktur auf der Objektoberfläche mittels Lasertransferdruck.

Beim Lasertransferdruck erfolgt die Beschichtung bekanntermaßen dadurch, dass Beschichtungsmaterial eines Spendermediums mittels Laserstrahlung auf die zu beschichtende Objektoberfläche transferiert wird.

Als Flachglas wird jedes Glas in Form von Scheiben bzw. Tafeln bezeichnet, unabhängig vom angewandten Herstellungsverfahren.

Glastafeln können dabei aus einer einzigen Glasscheibe bzw. Glasplatte bestehen (Einscheibenglas) oder es kann sich um Verbundglas handeln. Unter einer Verbundglastafel versteht man im Allgemeinen eine aus zwei oder mehr Glasscheiben bzw. Glasplatten mit gleicher oder unterschiedlicher Dicke ausgebildete Glastafel, wobei die Glasscheiben durch eine Zwischenschicht aus Kunststoff miteinander verbunden sind.

Um Flachglastafeln mit Filter-, Spiegel-, Heizfunktionen oder sonstigen Funktionen zu versehen, werden die unterschiedlichsten, ein- oder mehrlagigen Funktionsbeschichtungen auf die Glasscheiben aufgebracht. Die Funktionen können dabei z.B. Wärmeschutz, Sonnenschutz, oder Beheizung sein. Bei Low-E-Glas (Low-E = Low-Emissivity = niedrige Wärmeabstrahlung) reduzieren eine oder mehrere Metallschichten den Emissionsgrad der Glasscheiben und dienen als Wärme- und/oder Sonnenschutzschicht.

In der Regel ist die funktionelle Beschichtung bzw. Funktionsbeschichtung eine einzelne Funktionsschicht oder ein Schichtaufbau mit mehreren Funktionsschichten mit einer Gesamtdicke < 2 µm. Der Schichtaufbau wird in der Regel durch Abscheidevorgänge, vorzugsweise Sputtern, erhalten.

Bei den einzelnen Funktionsschichten handelt es sich somit in der Regel um metallische und/oder keramische Schichten. Beispielsweise handelt es sich um metallische Niedrigemissionsschichten oder elektrische Heizschichten. Zwischen den einzelnen metallischen Funktionsschichten einer Funktionsbeschichtung können eine oder mehrere dielektrische (Funktions)schichten, z.B. aus einem Oxid, wie Aluminiumoxid, angeordnet sein. Zudem ist zwischen der Funktionsbeschichtung und der Glasoberfläche in der Regel eine Haftvermittlungsschicht aus Zinnoxid vorhanden.

Auf dem Fachgebiet ist es bekannt, Glastafeln mittels Lasertransferdruck mit einer oberflächlichen Struktur zu beschichten. Bei der oberflächlichen Struktur handelt es sich beispielsweise um eine Markierung oder eine elektronische Struktur oder eine Vogelschutzstruktur.

Gemäß der DE 10 2005 026 038 A1 wird beispielsweise mittels Laser eine glasartige Schicht mit Metall-Nanopartikeln auf die Oberfläche der Glastafel aufgebracht. Dazu wird ein beschichtetes Spender- bzw. Trägermedium in Kontakt mit der zu beschriftenden Glastafeloberfläche gebracht und durch laserstrahlinduzierte Prozesse eine Markierung auf der Glasscheibenoberfläche erzeugt. Insbesondere wird ein Laserstrahl auf die Beschichtung des Trägermediums gerichtet und aufgrund der Laserstrahleinstrahlung Material aus der Beschichtung auf die zu markierende Objektoberfläche übertragen.

Gemäß der DE 10 2011 085 714 A1 wird in einem ähnlichen Verfahren eine elektrische Kontaktierung einer Oberfläche eines Objektes hergestellt.

Und die DE 10 2018 217 970 A1 offenbart ein Verfahren und eine Vorrichtung zur Herstellung einer elektronischen Struktur auf einer Glasscheibe, die zumindest an einer ihrer beiden Glasscheibenoberflächen eine Funktionsbeschichtung mit mindestens einer elektrisch leitfähigen Funktionsschicht aufweist, wobei die Funktionsbeschichtung mittels Laserstrahlung derart strukturiert wird, dass die elektronische Struktur erzeugt wird. Die Laserstrukturierung erfolgt dabei durch Modifikation oder Abtragung der Funktionsbeschichtung. Eine weitere elektronische Struktur kann durch Lasertransferdruck aufgebracht werden.

Des Weiteren offenbart die DE 10 2014 002 644 A1 das Erzeugen einer Vogelschutzstruktur auf einer Glastafeloberfläche mittels Lasertransferdruck.

Die DE 10 2021 215 023 offenbart eine mobile Laservorrichtung zur Bearbeitung von in einem Objekt, vorzugsweise einem Fahrzeug, bevorzugt einem Zug, oder einem Bauwerk, bevorzugt einem Gebäude, eingebauten, mindestens eine Glasscheibe aufweisenden, Glastafeln mittels Laserstrahlung an unterschiedlichen Einsatzorten, aufweisend ein Laserportal mit einem Portalgrundrahmen, einer an dem Portalgrundrahmen in eine x-, y-, und z-Richtung des Laserportals relativ zum Portalgrundrahmen hin- und her verfahrbaren Lasereinheit mit einem Laserkopf mit einer, vorzugsweise auswechselbaren, Laserstrahlungsquelle zur Bereitstellung eines Laserstrahls, vorzugsweise einer die Lasereinheit abdeckenden Laserschutzhaube zum Schutz der Umgebung vor Laserstrahlung, und Befestigungsmitteln zur festen aber lösbaren Befestigung des Laserportals an dem Objekt. Die Lasereinheit weist zudem eine Abstandsmesseinrichtung zur Vermessung der zu bearbeitenden Glastafel in z-Richtung auf und der Laserkopf weist eine optische z-Fokusverstellungseinrichtung zur, bevorzugt automatisierten, Verschiebung eines Laserfokus des Laserstrahls einer optischen z-Achse des Laserkopfes, insbesondere während der Bearbeitung der Glastafel, auf.

Die Laservorrichtung kann zudem eine Lasertransferdruckeinrichtung zum Beschichten von Glastafeln, insbesondere einer Glastafeloberfläche, mittels Lasertransferdruck aufweisen.

Die EP 3 954 538 A1 offenbart einen Aufsatz für einen Gerätekopf eines Lasermarkierungsgeräts mit einer Koppeleinrichtung, die ausgebildet ist, den Aufsatz am Gerätekopf des Lasermarkierungsgeräts zu befestigen, einer Abwickelspule, von der ein beschichteter bandförmiger Träger abwickelbar ist, und einer Aufwickelspule, auf die der Träger aufwickelbar ist, einem Aufsatzkopf, der ein Führungselement, mittels dem der Träger zwischen der Abwickelspule und der Aufwickelspule führbar ist, aufweist. Der Aufsatzkopf ist zudem auf einer zu markierenden Oberfläche eines Werkstücks setzbar ist, sodass bei aufgesetztem Aufsatzkopf ein Abschnitt des Trägers benachbart zur Oberfläche positioniert ist, wobei der Aufsatz derart ausgebildet ist, dass ein Laserstrahl vom Gerätekopf zum Aufsatzkopf verläuft, sodass er auf den Abschnitt des Trägers trifft.

Die US 2021/0107828 A1 offenbart ein Lasertransferdruckverfahren und eine Lasertransferdruckvorrichtung zum Markieren von Glastafeln, die zumindest an einer ihrer beiden Glastafeloberflächen eine Schutzbeschichtung aus Kunststoff aufweisen. Gemäß der US 2021/0107828 A1 wird die Schutzbeschichtung in dem zu markierenden Bereich mittels Laserstrahlung entfernt und in demselben Arbeitsgang wird auf die freigelegte Oberfläche mittels Lasertransferdruck Markierungsmaterial in Form der zur erzeugenden Markierung aufgebracht.

Aufgabe der vorliegenden Erfindung ist die Bereitstellung einer, vorzugsweise mobilen, Lasertransferdruckvorrichtung zum Beschichten einer Objektoberfläche, vorzugsweise einer Glastafeloberfläche oder einer Keramikoberfläche oder einer Metalloberfläche, mittels Lasertransferdruck, die eine hohe Bearbeitungsqualität und hohe Arbeitssicherheit und ein effizientes Beschichten gewährleistet.

Zudem soll eine Verwendung der Lasertransferdruckvorrichtung und ein Beschichtungsverfahren bereitgestellt werden, das eine hohe Bearbeitungsqualität und hohe Arbeitssicherheit und ein effizientes Beschichten gewährleistet.

Diese Aufgabe wird durch eine Lasertransferdruckvorrichtung mit den Merkmalen von Anspruch 1 oder 2 sowie eine Verwendung mit den Merkmalen von Anspruch 15 und ein Verfahren mit den Merkmalen von Anspruch 16 gelöst. Vorteilhafte Weiterbildungen der Erfindung werden in den sich anschließenden Unteransprüchen gekennzeichnet.

Im Folgenden wird die Erfindung anhand einer Zeichnung beispielhaft näher erläutert. Es zeigen:
- Figur 1:: Eine perspektivische Ansicht der erfindungsgemäßen Lasertransferdruckvorrichtung gemäß einer ersten Ausführungsform der Erfindung
- Figur 2:: Eine perspektivische Ansicht eines Laserhandgeräts mit Handgerätgehäuse
- Figur 3:: Eine perspektivische Ansicht des Laserhandgeräts ohne Handgerätgehäuse
- Figur 4:: Eine Draufsicht des Laserhandgeräts ohne Handgerätgehäuse
- Figur 5:: Eine vergrößerte, perspektivische Ansicht einer Andruckeinrichtung des Laserhandgeräts
- Figur 6:: Eine vergrößerte, perspektivische Ansicht eines Andruckelements der Andruckeinrichtung ohne Abdichtplatte
- Figur 7:: Eine vergrößerte, perspektivische Ansicht des Andruckelements mit Abdichtplatte
- Figur 8:: Schematisch eine Seitenansicht einer Verbundglastafel

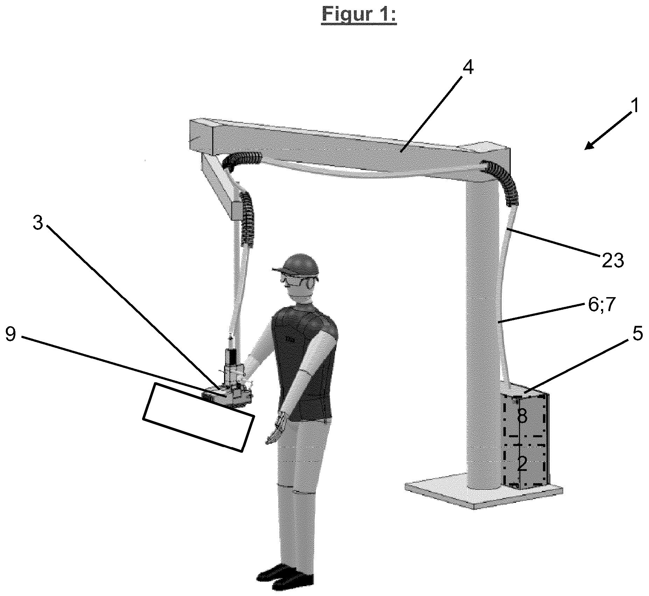

Die erfindungsgemäße Lasertransferdruckvorrichtung 1 (Fig. 1) weist gemäß einer ersten Ausführungsform der Erfindung eine Laserstrahlungsquelle 2, ein Laserhandgerät 3 sowie einen Manipulator 4 und einen Kontrollschrank bzw. Schaltschrank 5 auf.

Vorzugsweise handelt es sich bei der Laserstrahlungsquelle 2 je nach dem durchzuführenden Verfahren um einen UV-Laser oder einen IR-Laser oder einen VIS-Laser.

Des Weiteren kann es sich um einen Dauerstrichlaser oder einen gepulsten Laser handeln. Vorzugsweise handelt es sich um einen gepulsten Laser, bei dem die Pulsdauer und/oder die Repetitionsrate in bestimmten Grenzen einstellbar ist.

Vorzugsweise handelt es sich bei der Laserstrahlungsquelle 2 zudem um einen Laser, bei dem die Laserleistung anpassbar ist. Vorzugsweise ist die Laserleistung im Bereich von 5 bis 1000 W, bevorzugt 5 bis 200 Watt, besonders bevorzugt 20 bis 200 W einstellbar.

Im Rahmen eines bevorzugten Ausführungsbeispiels wird ein gepulster ns-Faserlaser mit einer Laserleistung von 100 W und einer Wellenlänge von 1 µm verwendet.

Bei der Laserstrahlungsquelle 2 handelt es sich zudem vorzugsweise um einen Faserlaser 6. Der Faserlaser 6 weist in an sich bekannter Weise zumindest eine Laserdiode (nicht dargestellt) und eine Laserfaser 7 auf. Die zumindest eine Laserdiode ist vorzugsweise im Schaltschrank 5 angeordnet.

Zudem weist Lasertransferdruckvorrichtung 1 vorzugsweise eine Steuereinrichtung 8 auf, welche ebenfalls vorzugsweise im Schaltschrank 5 angeordnet ist.

Vorzugsweise sind im Schaltschrank 5 zudem weitere elektrische Bauteile der Lasertransferdruckvorrichtung 1 angeordnet. Infolgedessen weist die Lasertransferdruckvorrichtung 1 vorzugsweise auch ein elektrisches Kabel auf, welches das Laserhandgerät 3 mit dem Schaltschrank 5 verbindet.

Das Laserhandgerät 3 ist am Manipulator 4, insbesondere hängend, befestigt. Bei einem Handgerät handelt es sich bekanntermaßen um ein handgeführtes Gerät.

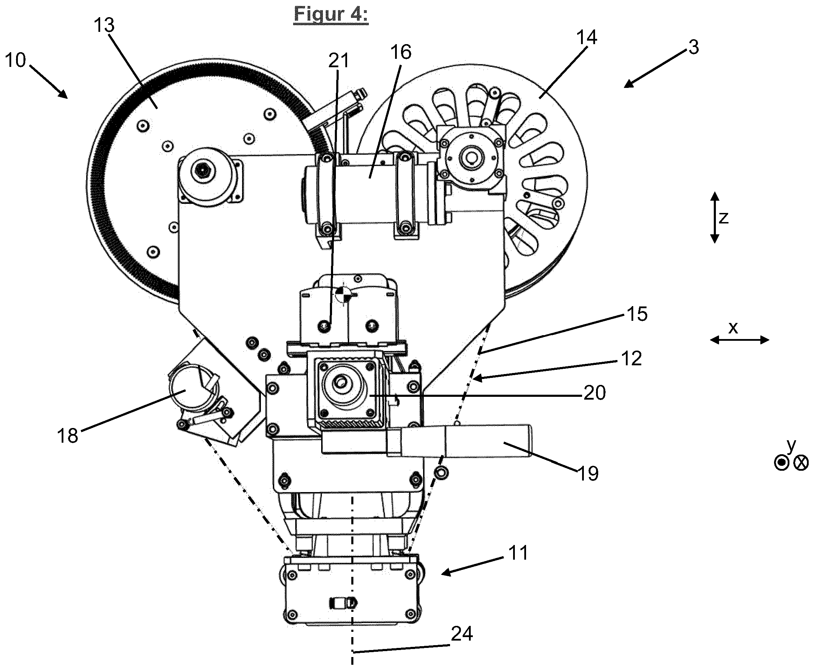

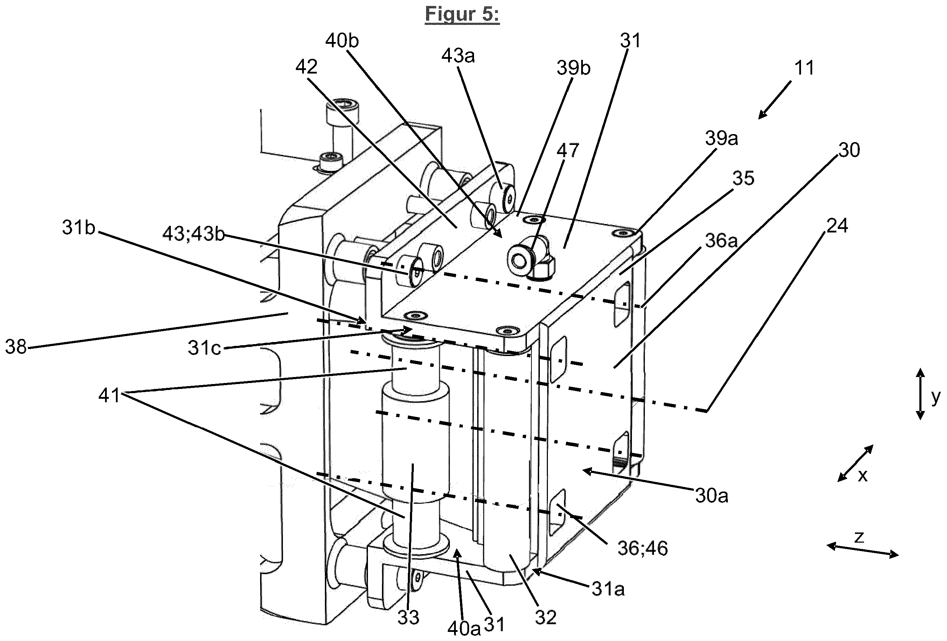

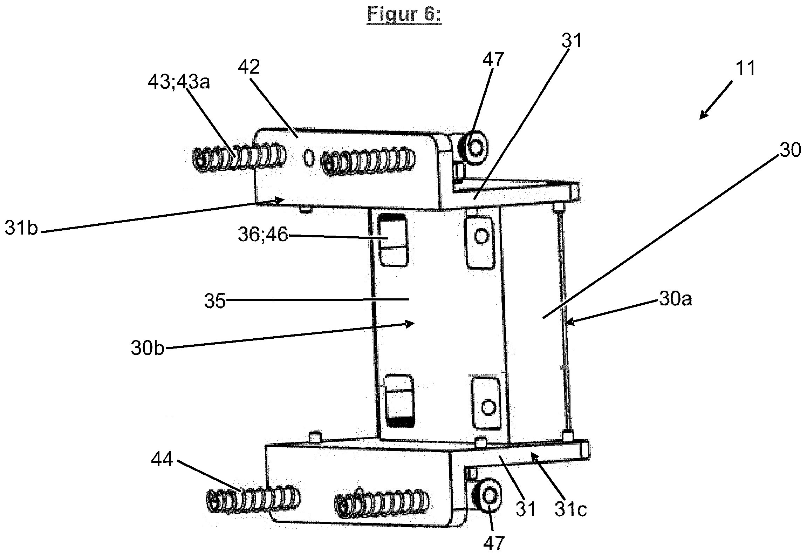

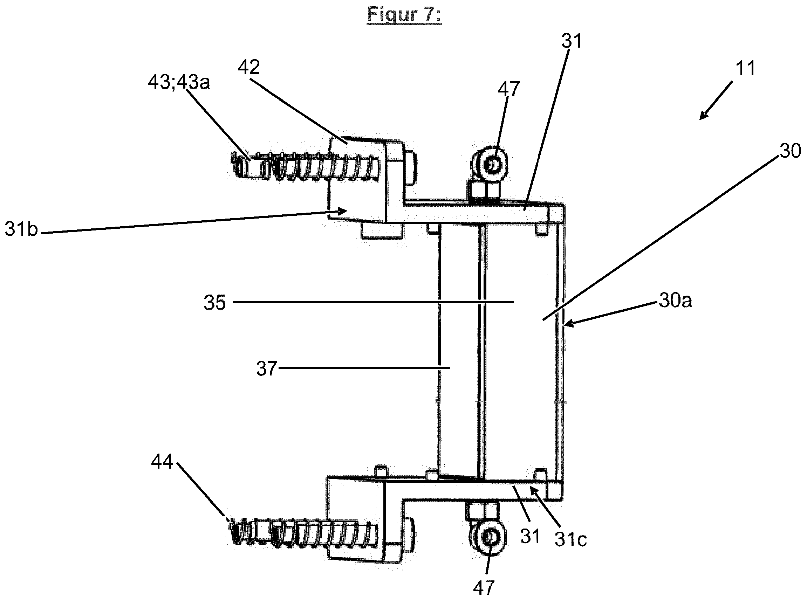

Das Laserhandgerät 3 (Figuren 1-7) weist ein Handgerätgehäuse 9 sowie vorzugsweise einen Handgriff 19 und zumindest jeweils teilweise in dem Handgerätgehäuse 9 angeordnet eine Spenderbandbereitstellungseinrichtung 10 mit einer Spenderbandandrückeinrichtung 11 sowie eine Laserstrahlmanipuliereinrichtung 12 zur Manipulation eines Laserstrahls auf.

Die Spenderbandbereitstellungseinrichtung 10 weist eine Vorratsrolle 13, eine Aufnahmerolle bzw. Aufwickelrolle 14, zwei auf der Vorratsrolle 13 und der Aufnahmerolle 14 aufgewickelte Spenderbänder bzw. Trägerbänder 15 (nur schematisch teilweise dargestellt) und einen Antriebsmotor 16 zum Antrieb der Aufnahmerolle 14 auf. Insbesondere wird die Aufnahmerolle 14 derart angetrieben, dass die beiden Spenderbänder 15 jeweils von der Vorratsrolle 13 abgewickelt und auf die Aufnahmerolle 14 aufgewickelt werden.

Die Vorratsrolle 13 und die Aufnahmerolle 14 sind jeweils um eine Rollendrehachse 13a;14a drehbar im Handgerätgehäuse 9 gelagert. Zudem steht die Aufnahmerolle 14 um ihre Aufnahmerollenachse 14a drehbar antreibbar mit dem Antriebsmotor 16 in Verbindung. Vorzugsweise weist die Spenderbandbereitstellungseinrichtung 10 zudem eine Bremseinrichtung (nicht dargestellt) zum Bremsen der Vorratsrolle 13 auf, um eine kontinuierliche Spannung der Spenderbänder 15 zu gewährleisten.

Die beiden Spenderbänder 15 sind parallel zueinander angeordnet und voneinander in einer zu den Rollenachsen 13a;14a parallelen Richtung beabstandet.

Bei den Spenderbändern 15 handelt es sich jeweils vorzugsweise um ein beschichtetes Kunststofffolienband, bevorzugt aus PET.

Des Weiteren weist ein Spenderband 15 jeweils eine oberflächliche Spenderbandbeschichtung aus Beschichtungsmaterial auf. Die Spenderbandbeschichtung weist vorzugsweise zumindest eine metallische Schicht und/oder zumindest eine keramische Schicht, bevorzugt eine keramische Schicht, auf.

Bevorzugt ist die Spenderbandbeschichtung einschichtig ausgebildet. Besonders bevorzugt besteht sie aus einem keramischen Material.

Des Weiteren weist die Spenderbandbeschichtung vorzugsweise eine Dicke von < 5 µm auf.

Des Weiteren sind die Spenderbänder 15 vorzugsweise auswechselbar. Dadurch können je nach Anwendungsfall unterschiedliche Spenderbänder 15 mit unterschiedlicher Spenderbandbeschichtung verwendet werden.

Die Spenderbandbereitstellungseinrichtung 10 weist außerdem mehrere Umlenkrollen 17 zum Umlenken und zur Führung der beiden Spenderbänder 15 auf.

Des Weiteren weist die Spenderbandbereitstellungseinrichtung 10 vorzugsweise einen Bandzähler 18 zur Messung und Bestimmung der Vorschubgeschwindigkeit der Spenderbänder 15 auf. Bevorzugt handelt es sich bei dem Bandzähler 18 um einen Inkrementalgeber.

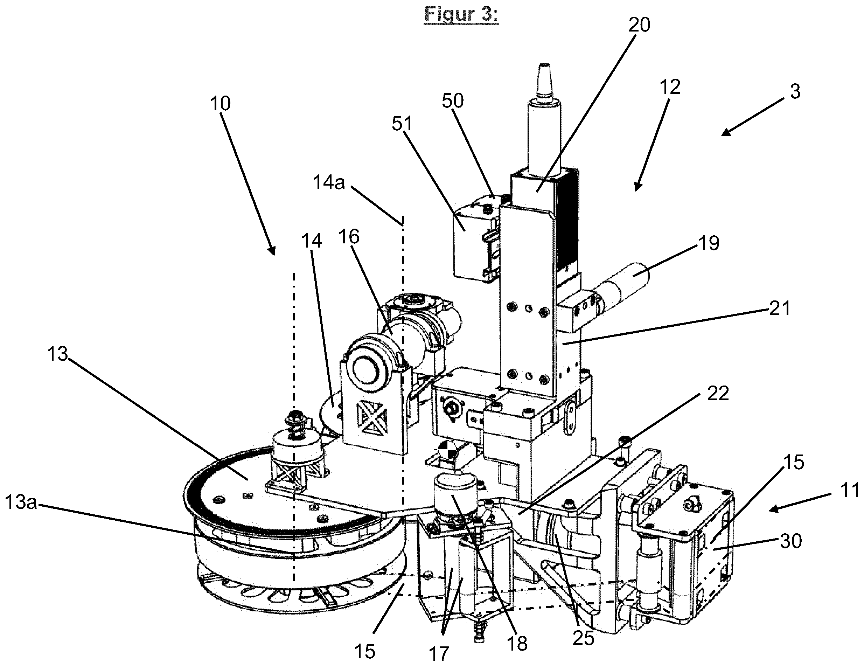

Die Laserstrahlmanipuliereinrichtung 12 (Fig. 3-5) weist einen Laserkollimator 20, einen Lasershutter 21, sowie einen Laserscankopf 22 mit einem Objektiv 25 auf. Sie dient dazu, die von der Laserstrahlungsquelle 2 bereit gestellte bzw. erzeugte Laserstrahlung bzw. den Laserstrahl auf die Spenderbänder 15, vorzugsweise auf die Spenderbandbeschichtung, zu richten bzw. zu fokussieren.

Der Laserkollimator 20 dient in an sich bekannter Weise zur Erzeugung von Laserstrahlung mit annähernd parallelem Strahlengang. Er ist der Laserfaser 7 nachgeordnet. Der Laserkollimator 20 dient also zur Umwandlung der divergenten Laserstrahlung, die von der Laserfaser 7 bereitgestellt wird, in Laserstrahlung mit annähernd parallelem Strahlengang. Die Laserfaser 7 ist dazu an ihrem der Laserdiode entgegengesetzten Ende mit dem Laserkollimator 20 verbunden.

Der Lasershutter 21 dient in an sich bekannter Weise dazu, den aus dem Laserkollimator 20 austretenden Laserstrahl zu blockieren. Er weist dazu in an sich bekannter Weise ein Blockierelement, insbesondere eine Blockierplatte auf, welche(s) in den Strahlengang des Laserstrahls hinein bringbar, insbesondere hinein schwenkbar, und aus den Strahlengang des Laserstrahls heraus bringbar, insbesondere heraus schwenkbar, ist. Die Ansteuerung des Lasershutters 21 erfolgt mittels der Steuereinrichtung 8, worauf weiter unten näher eingegangen wird.

Der Laserscankopf 22 ist dem Lasershutter 21 nachgeordnet.

Der Laserscankopf 22 dient zum Bewegen des Laserstrahls in einem Scanfeld. Mittels des Laserscankopfes 22 kann der Laserstrahl in y-Richtung und in x-Richtung bewegt werden. Die x- und y-Richtung sind senkrecht zueinander und senkrecht zu einer optischen z-Achse 24. Hierzu weist der Laserscankopf 22 in an sich bekannter Weise eine Scanoptik auf. Vorzugsweise handelt es sich bei der Scanoptik um zumindest zwei verstellbare Spiegel. Das Scanfeld beträgt z.B. 100 mm x 100 mm.

In an sich bekannter Weise kann der Laserstrahl dabei derart in y-Richtung und in x-Richtung bewegt werden, dass er parallel zur optischen z-Achse 24 bleibt oder in Relation zu dieser ausgelenkt wird.

Zudem weist der Laserscankopf 22 wie bereits erläutert das Objektiv 25 auf. Dabei ist das Objektiv 25 vorzugsweise kurzbrennweitig. Es weist vorzugsweise eine Brennweite von 20 bis 400 mm, bevorzugt von 80 bis 160 mm, auf. Dadurch wird eine starke Fokussierung und eine geringe Erstreckung des Laserfokus in die Tiefe bzw. in Richtung der optischen z-Achse 24 erreicht. Insbesondere ist der Laserfokus im Bereich von ca. +/- 1 mm in der Tiefe konstant.

Vorzugsweise ist das Objektiv 25 zudem auswechselbar, so dass unter anderem der Arbeitsabstand variiert und angepasst werden kann. Vorzugsweise ist das Objektiv 25 rausschraubbar.

Wie bereits erläutert, weist die Spenderbandbereitstellungseinrichtung 10 zudem die Spenderbandandrückeinrichtung 11 zum Andrücken der Spenderbänder 15 an die zu beschichtende Oberfläche auf.

Bei der zu beschichtenden Objektoberfläche handelt es sich vorzugsweis um eine Glasoberfläche oder eine Keramikoberfläche oder eine Metalloberfläche, bevorzugt um eine Glastafeloberfläche 26a einer Glastafel 26.

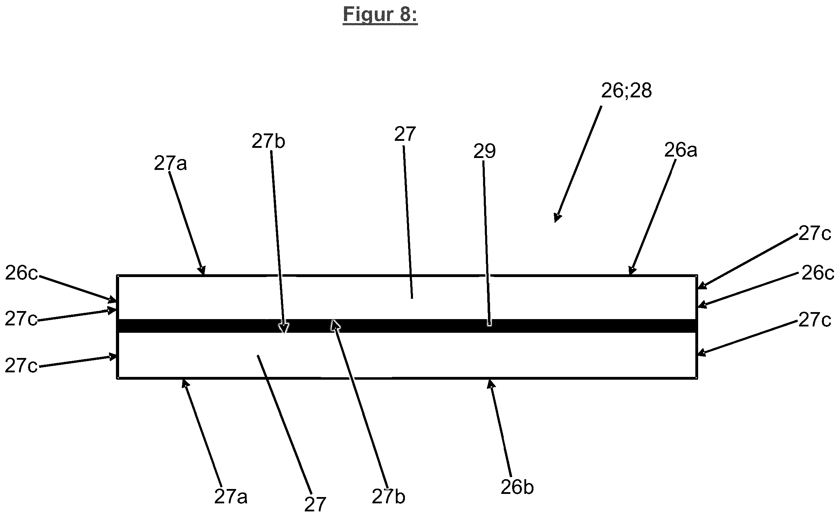

Die zu beschichtende Glastafel 26 (Fig. 8) kann aus einer einzigen Glasscheibe bzw. Glasplatte 27 bestehen (Einscheibenglas). Oder es kann sich um eine Verbundglastafel 28 handeln. Unter einer Verbundglastafel 28 versteht man eine aus zwei oder mehr Glasscheiben bzw. Glasplatten 27 mit gleicher oder unterschiedlicher Dicke ausgebildete Glastafel 26, wobei die Glasscheiben 27 durch eine Zwischenschicht aus Kunststoff bzw. einer Kunststofffolie 29 miteinander verbunden sind. Die Glastafel 26 weist also eine oder mehrere Glasscheiben 27 auf.

Die Glastafel 26 weist zudem zwei sich gegenüberliegende, außenliegende Glastafeloberflächen 26a;b auf. Die Glastafeloberflächen 26a;b sind parallel zur Glastafelebene und bei der Bearbeitung vorzugsweise senkrecht zur optischen z-Achse 24. Des Weiteren weist die Glastafel 26 eine umlaufende Glastafelkante 26c auf, die insbesondere die beiden Glastafeloberflächen 26a;b miteinander verbindet.

Eine Glasscheibe 27 weist ebenfalls jeweils zwei sich gegenüberliegende Glasscheibenoberflächen 27a;b auf und eine umlaufende Glasscheibenkante 26c. Die Glasscheibenoberflächen 27a;b sind ebenfalls parallel zur Glastafelebene und bei der Bearbeitung vorzugsweise senkrecht zur optischen z-Achse 24.

Ist die Glastafel 26 als Einscheibenglastafel ausgebildet, bilden die beiden Glasscheibenoberflächen 27a;b der einzigen Glasscheibe 27 gleichzeitig auch die Glastafeloberflächen 26a;b der Glastafel 26.

Ist die Glastafel 26 als Verbundglastafel 28 ausgebildet, bilden die außenliegenden Glasscheibenoberflächen 27a die Glastafeloberflächen 26a;b der Glastafel 6 und die anderen Glasscheibenoberflächen 27b sind innenliegend. Die Verbundglastafel 28 weist also mehr als zwei, insbesondere vier, Glasscheibenoberflächen 27a;b auf.

Die Glastafel 26 ist vorzugsweise ebenflächig ausgebildet. Sie kann aber auch gekrümmt bzw. gewölbt sein. Z.B. kann sie zylindermantelförmig ausgebildet sein. Es handelt sich bei der Glastafel 26 somit um ein flächiges Glaselement.

Zudem kann die zu bearbeitende Glastafel 26 Teil einer Isolierverglasung sein. Die Isolierverglasung weist in an sich bekannter Weise mindestens zwei zueinander parallele und voneinander beabstandet angeordnete Glastafeln und einen zwischen den Glastafeln angeordneten Abstandhalterrahmen, der die beiden Glastafeln 26 im Glastafelrandbereich miteinander verbindet, eine Primärdichtung sowie eine Randabdichtung (Sekundärdichtung) auf. Von den Glastafeln 26 und dem Abstandhalterrahmen wird ein Scheibeninnenraum begrenzt. Die Primärdichtung ist in an sich bekannter Weise zwischen dem Abstandhalterrahmen und der jeweiligen Glastafel 26 vorhanden und verklebt diese miteinander. Bei den Glastafeln 26 der Isolierverglasung kann es sich jeweils um eine Einscheibenglastafel 27 oder eine Verbundglastafel 28 handeln.

Die Spenderbandandrückeinrichtung 11 dient zum Andrücken der Spenderbänder 15 an die zu beschichtende Oberfläche, insbesondere die Glastafeloberfläche 26a.

Dazu weist die Spenderbandandrückeinrichtung 11 ein Andruckelement 30 mit einer, vorzugsweise ebenflächigen, Andruckfläche 30a auf.

Das Andruckelement 30 weist insbesondere einen Andruckelementgrundkörper 35 auf, der bevorzugt quaderförmig ausgebildet ist und die Andruckfläche 30a aufweist. Der Andruckelementgrundkörper 35 kann ein- oder mehrteilig ausgebildet sein. Vorzugsweise besteht der Andruckelementgrundkörper 35 aus Metall oder Kunststoff.

Gegenüberliegend zur Andruckfläche 30a weist das Andruckelement 30, insbesondere der Andruckelementgrundkörper 35, zudem vorzugsweise eine Andruckelementrückfläche 30b auf.

Zudem weist das Andruckelement 30 vorzugsweise zwei Lagerplatten 31 sowie zwei Umlenkrollen 32 und zwei Positionierrollen bzw. Ausrichtrollen 33 auf.

Die beiden Spenderbänder 15 sind um die beiden Umlenkrollen 32 und die beiden Ausrichtrollen 33 herum und an der Andruckfläche 30a entlanggeführt.

Die Andruckfläche 30a ist vorzugsweise senkrecht zur optischen z-Achse 24.

Zudem weist das Andruckelement 30 vier Laserdurchlassöffnungen 36 auf, die sich durch das Andruckelement 30, also insbesondere durch den Andruckelementgrundkörper 35, durch erstrecken. Die Laserdurchlassöffnungen 36 sind zur zu beschichtenden Objektoberfläche hin offen. Bzw. die Laserdurchlassöffnungen 36 sind an der Andruckfläche 30a offen. An ihrem der zu beschichtenden Objektoberfläche abgewandten Ende sind die Laserdurchlassöffnungen 36 zudem gasdicht verschlossen.

Insbesondere weist die Spenderbandandrückeinrichtung 11 hierfür eine Abdichtplatte 37 auf, die an der Andruckelementrückfläche 30b anliegt und mit dieser gasdicht verbunden ist, insbesondere verklebt ist. Die Abdichtplatte 37 besteht aus einem Material, das für Laserstrahlung durchlässig ist, bzw. aus einem für die Wellenlänge der Laserstrahlung nicht absorbierendem Material, vorzugsweise aus Quarz.

Die Laserdurchlassöffnungen 36 weisen zudem vorzugsweise einen viereckigen oder kreisförmigen Querschnitt auf.

Außerdem weisen die Laserdurchlassöffnungen 36 jeweils eine Laserdurchlassöffnungsmittelachse 36a auf, welche zwar vorzugsweise parallel zur optischen z-Achse 24 ist, allerdings zu dieser versetzt sind, also nicht koaxial zu dieser.

Des Weiteren sind die Laserdurchlassöffnungen 36 in Richtung der Laserdurchlassöffnungsmittelachsen 36a vorzugsweise jeweils konisch ausgebildet und verjüngen sich zur Andruckfläche 30a hin.

Wie bereits erläutert, sind beiden Spenderbänder 15 um die beiden Umlenkrollen 32 und die beiden Ausrichtrollen 33 herum und an der Andruckfläche 30a entlanggeführt. Dabei weist die beschichtete Seite der Spenderbänder 15 von der Andruckfläche 30a weg. Bzw. die unbeschichtete Seite der Spenderbänder 15 weist zur Andruckfläche 30a hin. Zudem deckt ein Spenderband 15 jeweils zwei Laserdurchlassöffnungen 36 ab. Bzw. ist ein Spenderband 15 jeweils in z-Richtung fluchtend zu zwei in x-Richtung zueinander benachbarten Laserdurchlassöffnungen 36 angeordnet.

Die beiden Lagerplatten 31 dienen zur Lagerung der beiden Umlenkrollen 31 und der Ausrichtrollen 33 sowie zur federnden Lagerung des Andruckelements 30 an einem Lagerrahmen 38.

Die beiden Lagerplatten 31 sind in einer zur z-Richtung senkrechten Richtung voneinander beabstandet und weisen jeweils eine vordere, freie, der Objektoberfläche zugewandte, Lagerplattenkante 31a und eine dieser gegenüberliegende hintere Lagerplattenkante 31b sowie zwei Lagerplattenseitenkanten 31c auf. Außerdem weisen die beiden Lagerplatten 31 jeweils zwei vordere Lagerplatteneckkanten 39a und zwei hintere Lagerplatteneckkanten 39b auf. Im Bereich der beiden vorderen Lagerplatteneckkanten 39a geht jeweils die vordere Lagerplattenkante 31a in eine der beiden Lagerplattenseitenkanten 31c über. Und im Bereich der beiden hinteren Lagerplatteneckkanten 39a geht jeweils die hintere Lagerplattenkante 31b in eine der beiden Lagerplattenseitenkanten 31c über. Die Lagerplatten 31 weisen zudem eine der anderen Lagerplatte zugewandte, innere Lagerplattenoberfläche 40a und eine der anderen Lagerplatte abgewandte, äußere Lagerplattenoberfläche 40b auf.

Der Andruckelementgrundkörper 35 ist im Bereich der vorderen Lagerplattenkante 31a angeordnet und zwischen den beiden Lagerplatten 31 angeordnet und fest mit diesen verbunden, insbesondere einstückig mit diesen ausgeführt.

Die beiden Umlenkrollen 32 und die beiden Ausrichtrollen 33 sind ebenfalls jeweils zwischen den beiden Lagerplatten 31 angeordnet und fest mit diesen verbunden, insbesondere verschraubt. Die beiden Umlenkrollen 32 und/oder die beiden Ausrichtrollen 33 können aber auch um ihre Umlenkrollenachse drehbar mit den beiden Lagerplatten 31 verbunden sein.

Zudem sind die beiden Umlenkrollen 32 vorzugsweise jeweils im Bereich einer der beiden vorderen Lagerplatteneckkanten 39a angeordnet.

Und die beiden Ausrichtrollen 33 sind vorzugsweise jeweils im Bereich einer der beiden hinteren Lagerplatteneckkanten 39b angeordnet.

Zudem weisen die beiden Ausrichtrollen 33 zwei voneinander beabstandete Führungsnuten 41 zur formschlüssigen Aufnahme jeweils eines der beiden Spenderbänder 15 auf. Dadurch, dass die beiden Spenderbänder 15 formschlüssig in den beiden Führungsnuten 41 angeordnet sind, werden sie zueinander positioniert. Bzw. dadurch wird der Abstand der beiden Spenderbänder 15 zueinander eingestellt bzw. definiert.

Die beiden Lagerplatten 31 weisen zudem im Bereich ihrer hinteren Lagerplattenkante 31b jeweils einen Lagersteg 42 auf, der von der jeweiligen äußere Lagerplattenoberfläche 40b absteht. Mittels der beiden Lagerstege 42 ist das Andruckelement 30 in z-Richtung hin- und her verschiebbar an dem Lagerrahmen 38 gelagert. Dazu weisen die Lagerstege 42 jeweils zwei durchgehende Lageröffnungen auf, durch die jeweils ein Schraubenschaft bzw. Schraubenbolzen 43a einer Lagerschraube 43 durchgeführt ist. Mit ihrem einem Schraubenkopf 43b abgewandten Ende ist die Lagerschraube 43 in den Lagerrahmen 38 eingeschraubt. Zudem ist um den Schraubenbolzen 43a herum jeweils eine Schraubenfeder 44 angeordnet. Die Schraubenfedern 44 drücken die Lagerplatten 31 und damit das Andruckelement 30 von dem Lagerrahmen 38 weg und damit zur zu beschichtenden Objektoberfläche hin.

Die Spenderbandandrückeinrichtung 11 weist außerdem eine Druckluftbeaufschlagungseinrichtung 45 zur Beaufschlagung der Laserdurchlassöffnungen 36 mit Druckluft auf. Die einseitig abgeschlossenen Laserdurchlassöffnungen 36 bilden somit erfindungsgemäße Druckkammern 46.

Vorzugsweise weisen die Druckkammern 46 ein Volumen von 125 mm³ bis 72.000 mm³, bevorzugt 900 bis 20.000 mm³ auf.

Die Druckluftbeaufschlagungseinrichtung 45 weist eine Druckluftquelle (nicht dargestellt) sowie zumindest eine, vorzugsweise mehrere, an die Druckluftquelle angeschlossene Druckluftleitungen auf, welche an das Andruckelement 30 angeschlossen sind. Beispielhaft sind hierzu zwei Druckluftanschlüsse 47 vorhanden. Die Druckluftkammern 46 sind miteinander und mit den Druckluftanschlüssen 47 fluidtechnisch verbunden, wozu das Andruckelement 30, vorzugsweise der Andruckelementgrundkörper 35, vorzugsweise Kanäle aufweist.

Die Druckluftbeaufschlagungseinrichtung 45 weist zudem mindestens einen Druckkammer-Drucksensor 50 zur Messung des in den Druckkammern 46 herrschenden Druckes auf. Der Druckkammer-Drucksensor 50 ist vorzugsweise außerhalb der Druckkammern 46 angeordnet und fluidtechnisch mit den Drucckammern 46 verbunden. Vorzugsweise weist die Druckluftbeaufschlagungseinrichtung 45 zudem mindestens einen Umgebungsdrucksensor 51 zur Messung des Umgebungsdruckes auf. Dies dient zur Bestimmung des Differenzdruckes zwischen dem Umgebungsdruck und dem in den Druckkammern 46 herrschenden Druck. Der Differenzdruck wird vorzugsweise mittels der Steuereinrichtung 8 ermittelt. Die Drucksensoren 50;51 stehen also mit der Steuereinrichtung 8 in signalübertragender Verbindung.

Das Handgerätgehäuse 9 umgibt einzelne Bauteile bzw. Komponenten des Laserhandgeräts 3. Es weist im Bereich des Andruckelements 30 eine Öffnung auf, so dass Andruckelement 30 an die Objektoberfläche angedrückt werden kann.

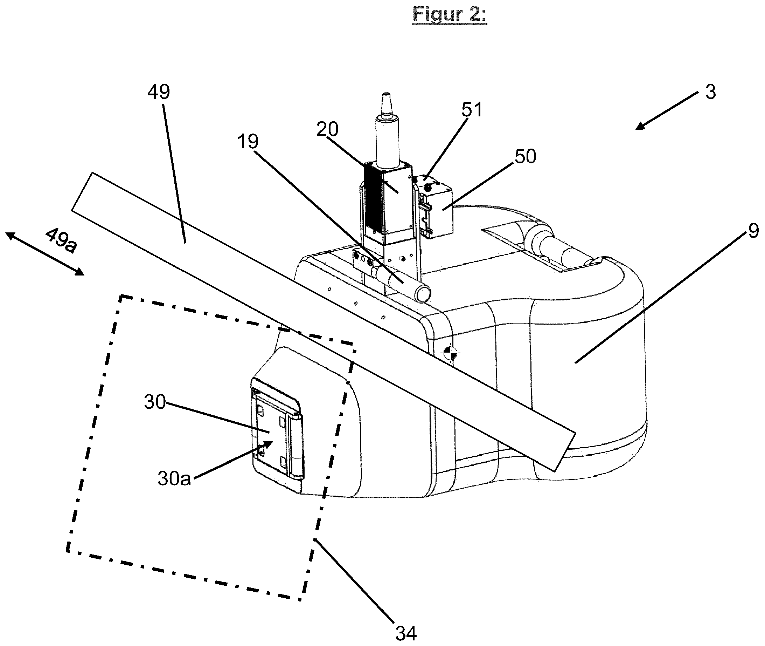

Die erfindungsgemäße Lasertransferdruckvorrichtung 1 weist außerdem gegebenenfalls eine Laserschutzeinrichtung 34 (in Figur 2 stark vereinfacht angedeutet) zur Anordnung auf der dem Laserhandgerät 3 gegenüberliegenden Seite des zu beschichtenden Objekts zum Schutz der Umgebung vor Laserstrahlung auf. Insbesondere handelt es sich bei der Laserschutzeinrichtung 34 um eine Absorberplatte, welche die Laserstrahlung absorbiert. Die Laserschutzeinrichtung 34 ist dann notwendig, wenn das zu beschichtende Objekt durchlässig für die Laserstrahlung ist.

Vorzugsweise weist die Lasertransferdruckvorrichtung 1 auch Mittel zur sensorischen Überwachung auf, ob die Laserschutzeinrichtung 34 ordnungsgemäß platziert ist oder nicht. Auch dies ist eine Voraussetzung dafür, ob der Laserstrahl durch den Lasershutter 21 frei gegeben wird oder nicht. Beispielsweise werden hierzu entsprechende Sensoren am Objekt platziert, die mit der Steuereinrichtung 8 in Verbindung stehen.

Im Folgenden wird nun das Lasertransferdruckverfahren mittels der erfindungsgemäßen Lasertransferdruckvorrichtung 1 erläutert.

Zunächst wird das Laserhandgerät 3 von einer Bedienperson positioniert. Dazu wird das Andruckelement 30 in dem Bereich, in dem beschichtet werden soll, an die Objektoberfläche angedrückt. Über das Andruckelement 30 werden die Spenderbänder 15 mit ihrer beschichteten Seite an die Objektoberfläche angedrückt und liegen an dieser an. Dadurch wird die Spenderbandbeschichtung an die Objektoberfläche angedrückt.

Dabei befindet sich das Blockierelement, insbesondere die Blockierplatte, des Lasershutters 21 zunächst im Strahlengang des Laserstrahls, so dass keine Laserstrahlung an den Laserscankopf 22 weitergeleitet wird.

Die Druckkammern 46 werden kontinuierlich mit Druckluft beaufschlagt und der Druck in den Druckkammern 46 und der Umgebung mit den Drucksensoren 50;51 gemessen. Sobald ein vorbestimmter Soll-Differenzdruck zwischen Umgebungsdruck und Druck in den Druckkammern 46 erreicht ist (=Mindest-Soll-Differenzdruck), bedeutet dies, dass der Anpressdruck ausreichend hoch ist. Die Spenderbänder 15 werden mit ausreichendem Anpressdruck an die Objektoberfläche angedrückt und an dieser fixiert. Außerdem kann dadurch keine Laserstrahlung austreten.

Sobald der Soll-Differenzdruck erreicht ist, wird mittels der Steuereinrichtung 8 der Lasershutter 21 derart angesteuert, dass das Blockierelement, vorzugsweise die Blockierplatte, aus dem Strahlengang des Laserstrahls heraus geschwenkt wird. Dadurch wird der Laserstrahl nicht mehr blockiert und an den Laserscankopf 22 weitergeleitet.

Falls die Laserschutzeinrichtung 34 vorhanden ist, wird der Laserstrahl nur freigegeben, wenn die ordnungsgemäße Positionierung der Laserschutzeinrichtung 34 ebenfalls sensorisch erfasst ist.

Mittels des Laserscankopfes 22 wird nun der Laserstrahl abgelenkt, dass er durch eine der Laserdurchlassöffnungen 36 bzw. die Druckkammern 46 durchstrahlt. Zudem wird der Laserstrahl mittels des Laserscankopfes 22 auf die jeweilige Spenderbandbeschichtung des Spenderbands 15 gerichtet, insbesondere fokussiert, welches die jeweilige Laserdurchlassöffnung 36 abdeckt.

Dann wird mittels des auf die Spenderbandbeschichtung fokussierten Laserstrahls Beschichtungsmaterial aus der Spenderbandbeschichtung auf die Objektoberfläche übertragen und an dieser fixiert. Dadurch, dass die Laserstrahlung von dem Beschichtungsmaterial absorbiert wird, wird dieses von dem Spenderband 15 gelöst und auf die zu beschichtende Objektoberfläche befördert.

Dabei wird der Laserstrahl relativ zum Spenderband 15 in x- und/oder y-Richtung mittels der Scaneinrichtung bewegt und so die Fläche des Beschichtungsmaterials abgefahren, welches übertragen werden soll.

Und im Anschluss daran wird der Laserstrahl mittels des Laserscankopfes 22 derart abgelenkt, dass er durch die nächste Laserdurchlassöffnung 36 bzw. die nächste Druckkammer 46 durchstrahlt. Dies erfolgt so lange, bis alle Laserdurchlassöffnung 36 durchlaufen wurden.

Dann wird das Laserhandgerät 3 von der Bedienperson vom Objekt entfernt. Dadurch fällt automatisch der Druck in den Druckkammern 46 ab und der Differenzdruck sinkt. Sobald dies von der Steuereinrichtung 8 detektiert wird, wird mittels der Steuereinrichtung 8 der Lasershutter 21 derart angesteuert, dass das Blockierelement, vorzugsweise die Blockierplatte, wieder in den Strahlengang des Laserstrahls hinein geschwenkt wird. Dadurch wird der Laserstrahl wieder blockiert und nicht mehr an den Laserscankopf 22 weitergeleitet.

Die beiden Spenderbänder 15 werden zudem durch Antrieb der Aufnahmerolle 14 soweit weiterbewegt, dass wieder frisches, beschichtetes Material fluchtend zu den Laserdurchlassöffnungen 36 angeordnet ist. Nun kann der nächste Beschichtungsvorgang erfolgen.

Mittels des Lasertransferdrucks kann insbesondere eine Beschichtung in Form einer Vogelschutzstruktur erzeugt werden. Vorzugsweise wird eine Vogelschutzstruktur gemäß der DE 10 2014 002 644 A1 erzeugt. Die Vogelschutzstruktur besteht beispielsweise aus mehreren nebeneinander angeordneten Punkten. Insbesondere handelt es sich um ein Gitter aus regelmäßig nebeneinander und übereinander angeordneten Punkten. Pro Laserdurchlassöffnung 36 wird dabei ein flächiges geometrisches Element, z.B. eine Kreisfläche, erzeugt.

Auch kann ebenfalls eine Beschichtung in Form einer elektronischen Struktur, z.B. eine Alarmschleife oder ein Schalter oder eine elektronische Struktur eines Heizglases, erzeugt werden. Insbesondere können Leiterbahnen aufgebracht werden.

Des Weiteren kann selbstverständlich auch eine Markierung, vorzugsweise eine maschinenlesbare Markierung, bevorzugt ein maschinenlesbarer Code, bevorzugt ein Data-Matrix-Code (DCM) oder ein Barcode oder ein QR Code aufgebracht werden.

Außerdem können Dekorelemente und Rahmen aufgebracht werden.

Zudem kann auch eine biozid wirkende Glastafeloberfläche 26a;b gemäß der DE 10 2016 125 544 A1 erzeugt werden.

Gemäß einer weiteren Ausführungsform der Erfindung (Fig. 2) weist die Lasertransferdruckvorrichtung 1 keinen Manipulator 4, sondern eine Montageleiste 49 mit einer Leistenlängsrichtung 49a auf (in Figur 2 stark vereinfacht dargestellt). Die Montageleiste 49 dient zur Befestigung an dem zu beschichtenden Objekt. Das Laserhandgerät 3 weist zudem Befestigungsmittel auf, mit denen das Laserhandgerät 3 parallel zur Leistenlängsrichtung 49a hin- und her verfahrbar an der Montageleiste 49 befestigbar ist. Die Montageleiste 49 weist vorzugsweise eine integrierte Wasserwaage auf. Nach Montage der Montageleiste 49 kann somit das Laserhandgerät 3 in horizontaler Richtung entlang der Montageleiste 49, insbesondere von der Bedienperson, verfahren werden, so dass zueinander benachbarte Beschichtungen sehr genau zueinander positioniert werden können.

Gemäß einer weiteren Ausführungsform der Erfindung weist die Lasertransferdruckvorrichtung 1 weder den Manipulator 4 noch die Montageleiste 49 auf. Das Laserhandgerät 3 wird dann frei geführt.

Vorteil der erfindungsgemäßen Lasertransferdruckvorrichtung 1 ist, dass die Druckkammern 46 ein sehr geringes Volumen aufweisen. Dadurch baut sich der Solldruck sehr schnell auf und der Laserstrahl wird sehr schnell frei gegeben. Dies beschleunigt das gesamte Verfahren enorm.

Zudem werden die Spenderbänder 15 durch den auf sie im Bereich der Drucckammern 46 wirkenden Druck an die Objektoberfläche angedrückt und damit sehr genau positioniert.

Die gesamte Konstruktion ist zudem sehr einfach, es sind keine zusätzlichen Dichtlippen erforderlich, vielmehr dienen die Spenderbänder 15 selber zur Abdichtung der Druckkammern 46 an ihrem der Objektoberfläche zugewandten Ende.

Vorteil der mobilen Lasertransferdruckvorrichtung 3 mit dem Laserhandgerät 3 ist zudem, dass diese zur Nachrüstung von Fassaden oder Fenstern, insbesondere mit einer Vogelschutzstruktur, verwendet werden kann.

Im Rahmen der Erfindung liegt es dabei aber auch, die erfindungsgemäße Spenderbandbereitstellungseinrichtung 10 in einer stationären Lasertransferdruckvorrichtung 1 vorzusehen.

Sie kann zudem auch in einer mobilen Laservorrichtung gemäß der DE 10 2021 215 023 vorhanden sein.

Des Weiteren liegt es im Rahmen der Erfindung, dass sich die jeweilige Drucckammer 46 nicht durch die gesamte Laserdurchlassöffnung 36 erstreckt. Beispielsweise kann die Laserdurchlassöffnung 36 auch mittig eine Abdichtscheibe (nicht dargestellt) aufweisen. Es kommt lediglich darauf an, dass die Druckkammer 46 an der Andruckfläche 30a offen ist bzw. an die Umgebung mündet. In diesem Fall weist die Laserdurchlassöffnung 36 ebenfalls die Druckkammer 46 auf bzw. ein Teil der Laserdurchlassöffnung 36 bildet die Druckkammer 46.

Zudem liegt es im Rahmen der Erfindung, dass das Andruckelement lediglich eine einzige Laserdurchlassöffnung 36 aufweist. Vorzugsweise weist es aber mehrere, bevorzugt zwei bis sechs, besonders bevorzugt zwei bis vier, Laserdurchlassöffnungen 36, auf.

Des Weiteren liegt es im Rahmen der Erfindung, dass anstelle des Lasershutters 21 eine andere Laserstrahlblockiereinrichtung vorhanden ist. Oder es ist gar keine Laserstrahlblockiereinrichtung vorhanden und die Laserstrahlungsquelle 2 wird an- und ausgeschaltet, je nachdem, ob der Laserstrahl das zumindest eine Spenderband 15 bestrahlen soll oder nicht. Dies wird dann ebenfalls von der Steuereinrichtung 8 gesteuert.

Es kommt eben nur darauf an, dass die Lasertransferdruckvorrichtung 1 Mittel aufweist, mit denen gesteuert werden kann, ob der Laserstrahl das zumindest eine Spenderband 15 bestrahlt oder nicht. Bzw. die Lasertransferdruckvorrichtung 1 weist mit der Steuereinrichtung 8 ansteuerbare Mittel auf, welche derart ansteuerbar sind, dass der Laserstrahl das zumindest eine Spenderband 15 bestrahlt oder nicht.

Im Rahmen der Erfindung liegt es zudem auch, dass nicht der Soll-Differenzdruck zur Steuerung verwendet wird, sondern lediglich ein Solldruck in den Druckkammern 46, ohne dass der Umgebungsdruck gemessen wird. Sobald der Solldruck (=Mindest-Solldruck) erreicht ist, wird der Laserstrahl freigegeben bzw. die Laserstrahlungsquelle 2 aktiviert.

Auch liegt es im Rahmen der Erfindung, anstelle von Druckluft ein anderes Gas zu verwenden. Sofern nicht anders angegeben, steht der Begriff "Druckluft" im Rahmen der Erfindung also synonym für jegliches "Gas". Vorzugsweise handelt es sich aber um Druckluft, da dies am kostengünstigsten ist.

## Patentansprüche

1. Lasertransferdruckvorrichtung (1) zum Beschichten einer Objektoberfläche, vorzugsweise einer Glasoberfläche oder einer Keramikoberfläche, oder einer Metalloberfläche, bevorzugt einer Glastafeloberfläche (26a;b), mittels Lasertransferdruck, aufweisend
a) eine Spenderbandbereitstellungseinrichtung (10) zur Bereitstellung zumindest eines, eine Spenderbandbeschichtung aufweisenden, Spenderbands (15) mit einer Spenderbandandrückeinrichtung (11), wobei die Spenderbandandrückeinrichtung (11) ein eine Andruckfläche (30a) aufweisendes Andruckelement (30) zum Andrücken des zumindest einen Spenderbands (15) an die Objektoberfläche aufweist, wobei das Andruckelement (30) mindestens eine Laserdurchlassöffnung (36) zum Durchführen der Laserstrahlung durch das Andruckelement (30) hindurch aufweist, wobei die Laserdurchlassöffnung (36) eine an der Andruckfläche (30a) offene Druckkammer (46) aufweist, b) eine Laserstrahlungsquelle (2),
c) eine Laserstrahlmanipuliereinrichtung (12) zur Manipulation des von der Laserstrahlungsquelle (2) bereit gestellten Laserstrahls, und
d) eine Steuereinrichtung (8),
**dadurch gekennzeichnet, dass**
die Lasertransferdruckvorrichtung (1) eine Druckluftbeaufschlagungseinrichtung (45) zur Beaufschlagung der Druckkammer (46) mit Druckluft aufweist, wobei die Druckluftbeaufschlagungseinrichtung (45) mindestens einen mit der Steuereinrichtung (8) in Verbindung stehenden Drucckammer-Drucksensor (50) zur Messung des in der Druckkammer (46) herrschenden Druckes aufweist,
und die Druckluftbeaufschlagungseinrichtung (45) mindestens einen mit der Steuereinrichtung (8) in Verbindung stehenden Umgebungsdrucksensor (51) zur Messung des Umgebungsdruckes aufweist,
und die Lasertransferdruckvorrichtung (1) so eingerichtet ist, dass der Laserstrahl das zumindest eine Spenderband (15) nur bestrahlt, wenn ein vorgegebener Soll-Differenzdruck zwischen Umgebungsdruck und Druck in der zumindest einen Druckkammer (46) von der Steuereinrichtung (8) detektiert ist.

2. Lasertransferdruckvorrichtung (1) zum Beschichten einer Objektoberfläche, vorzugsweise einer Glasoberfläche oder einer Keramikoberfläche, oder einer Metalloberfläche, bevorzugt einer Glastafeloberfläche (26a;b), mittels Lasertransferdruck, aufweisend
a) eine Spenderbandbereitstellungseinrichtung (10) zur Bereitstellung zumindest eines, eine Spenderbandbeschichtung aufweisenden, Spenderbands (15) mit einer Spenderbandandrückeinrichtung (11), wobei die Spenderbandandrückeinrichtung (11) ein eine Andruckfläche (30a) aufweisendes Andruckelement (30) zum Andrücken des zumindest einen Spenderbands (15) an die Objektoberfläche aufweist, wobei das Andruckelement (30) mindestens eine Laserdurchlassöffnung (36) zum Durchführen der Laserstrahlung durch das Andruckelement (30) hindurch aufweist, wobei die Laserdurchlassöffnung (36) eine an der Andruckfläche (30a) offene Druckkammer (46) aufweist, b) eine Laserstrahlungsquelle (2),
c) eine Laserstrahlmanipuliereinrichtung (12) zur Manipulation des von der Laserstrahlungsquelle (2) bereit gestellten Laserstrahls, und
d) eine Steuereinrichtung (8),
**dadurch gekennzeichnet, dass**
die Lasertransferdruckvorrichtung (1) eine Druckluftbeaufschlagungseinrichtung (45) zur Beaufschlagung der Druckkammer (46) mit Druckluft aufweist, wobei die Druckluftbeaufschlagungseinrichtung (45) mindestens einen mit der Steuereinrichtung (8) in Verbindung stehenden Drucckammer-Drucksensor (50) zur Messung des in der Druckkammer (46) herrschenden Druckes aufweist,
und die Lasertransferdruckvorrichtung (1) so eingerichtet ist, dass der Laserstrahl das zumindest eine Spenderband (15) nur bestrahlt, wenn ein vorgegebener Solldruck in der zumindest einen Druckkammer (46) von der Steuereinrichtung (8) detektiert ist.

3. Lasertransferdruckvorrichtung (1) nach Anspruch 1 oder 2,
**dadurch gekennzeichnet, dass**
die zumindest eine Laserdurchlassöffnung (36) an ihrem der zu beschichtenden Objektoberfläche abgewandten Ende gasdicht verschlossen ist, wobei vorzugsweise die Spenderbandandrückeinrichtung (11) eine Abdichtplatte (37) aufweist, die an einer der Andruckfläche (30a) gegenüberliegenden Andruckelementoberfläche (30b) anliegt und mit dieser gasdicht verbunden ist, insbesondere verklebt ist, wobei die Abdichtplatte (37) aus einem Material besteht, das für Laserstrahlung durchlässig ist bzw. das die Wellenlänge der Laserstrahlung nicht absorbiert, vorzugsweise aus Quarzglas.

4. Lasertransferdruckvorrichtung (1) nach einem der vorhergehenden Ansprüche,
**dadurch gekennzeichnet, dass**
a) das Andruckelement (30) mehrere, vorzugsweise zwei bis sechs, bevorzugt zwei bis vier, Laserdurchlassöffnungen (36), aufweist und die Druckkammern (46) der Laserdurchlassöffnungen (36) miteinander fluidtechnisch verbunden sind,
und/oder
b) die Laserdurchlassöffnungen (36) jeweils eine Laserdurchlassöffnungsmittelachse (36a) aufweisen, welche vorzugsweise parallel zu einer optischen z-Achse (24) des Laserscankopfes (22) ist, wobei zumindest eine der Laserdurchlassöffnungsmittelachsen (36a) zur optischen z-Achse (24) versetzt ist.

5. Lasertransferdruckvorrichtung (1) nach Anspruch 4,
**dadurch gekennzeichnet, dass**
die Laserdurchlassöffnungen (36) in Richtung der Laserdurchlassöffnungsmittelachsen (36a) jeweils konisch ausgebildet sind und sich zur Andruckfläche (30a) hin verjüngen.

6. Lasertransferdruckvorrichtung (1) nach einem der vorhergehenden Ansprüche,
**dadurch gekennzeichnet, dass**
a) der Druckkammer-Drucksensor (50) außerhalb der zumindest einen Druckkammer (46) angeordnet ist und fluidtechnisch mit der zumindest einen Druckkammer (46) verbunden ist,
und/oder
b) das zumindest eine Spenderband (15) an der Andruckfläche (30a) entlang geführt ist, wobei die beschichtete Seite des Spenderbands (15) von der Andruckfläche (30a) weg weist und das Spenderband (15) zumindest eine, vorzugsweise mehrere, Laserdurchlassöffnungen (36), abdeckt,
und/oder
c) das Andruckelement (30) in eine z-Richtung hin- und her verschiebbar und vorzugsweise federnd an einem Lagerrahmen (38) des Laserhandgeräts (3) gelagert ist.

7. Lasertransferdruckvorrichtung (1) nach einem der vorhergehenden Ansprüche,
**dadurch gekennzeichnet, dass**
a) die zumindest eine Druckkammer (46) ein Volumen von 125 mm³ bis 72.000 mm³, bevorzugt 900 bis 20.000 mm³, aufweist,
und/oder
b) die zumindest eine Laserdurchlassöffnung (36) einen viereckigen oder kreisförmigen Querschnitt aufweist.

8. Lasertransferdruckvorrichtung (1) nach einem der vorhergehenden Ansprüche,
**dadurch gekennzeichnet, dass**
die Laserstrahlmanipuliereinrichtung (12) eine Laserstrahlblockiereinrichtung, bevorzugt einen Lasershutter (21), zum Blockieren des Laserstrahls aufweist, und vorzugsweise
a) die Lasertransferdruckvorrichtung (1) so eingerichtet ist, dass der Lasershutter (21) den Laserstrahl nur frei gibt, wenn mittels der Drucksensoren (50;51) der vorgegebene Soll-Differenzdruck zwischen Umgebungsdruck und Druck in der zumindest einen Druckkammer (46) detektiert ist,
oder
b) die Lasertransferdruckvorrichtung (1) so eingerichtet ist, dass der Lasershutter (21) den Laserstrahl nur frei gibt, wenn mittels des zumindest einen Druckkammer-Drucksensors (50) der vorgegebene Solldruck in der zumindest einen Druckkammer (46) detektiert ist.

9. Lasertransferdruckvorrichtung (1) nach Anspruch 8,
**dadurch gekennzeichnet, dass**
der Lasershutter (21) ein Blockierelement, insbesondere eine Blockierplatte aufweist, welche(s) in den Strahlengang des Laserstrahls hinein bringbar, insbesondere hinein schwenkbar, und aus den Strahlengang des Laserstrahls heraus bringbar, insbesondere heraus schwenkbar, ist.

10. Lasertransferdruckvorrichtung (1) nach einem der Ansprüche 1 bis 7,
**dadurch gekennzeichnet, dass**
a) die Lasertransferdruckvorrichtung (1) so eingerichtet ist, dass die Laserstrahlungsquelle (2) nur in Gang gesetzt und/oder betrieben werden kann, wenn, wenn mittels der Drucksensoren (50;51) der vorgegebene Soll-Differenzdruck zwischen Umgebungsdruck und Druck in der zumindest einen Druckkammer (46) detektiert ist,
oder
b) die Lasertransferdruckvorrichtung (1) so eingerichtet ist, dass die Laserstrahlungsquelle (2) nur in Gang gesetzt und/oder betrieben werden kann, wenn mittels des zumindest einen Druckkammer-Drucksensors (50) der vorgegebene Solldruck in der zumindest einen Drucckammer (46) detektiert ist.

11. Lasertransferdruckvorrichtung (1) nach einem der vorhergehenden Ansprüche,
**dadurch gekennzeichnet, dass**
die Laserstrahlmanipuliereinrichtung (12) einen Laserscankopf (22) aufweist, der eine Scaneinrichtung zur Bewegen des Laserstrahls in einem Scanfeld in eine x- und y-Richtung aufweist, wobei die Scaneinrichtung vorzugsweise eine Scanoptik zur Bewegen des Laserstrahls in dem Scanfeld aufweist,
wobei vorzugsweise der Laserscankopf (22) ein sich an die Scaneinrichtung anschließendes Objektiv (25) aufweist.

12. Lasertransferdruckvorrichtung (1) nach einem der vorhergehenden Ansprüche,
**dadurch gekennzeichnet, dass**
a) die Spenderbandbeschichtung mindestens eine metallische und/oder mindestens eine keramische Schicht, bevorzugt eine keramische Schicht, aufweist,
und/oder
b) die Spenderbandandrückeinrichtung (11) zwei Ausrichtrollen (33) aufweist, die jeweils zwei voneinander beabstandete Führungsnuten (41) zur formschlüssigen Aufnahme jeweils eines Spenderbands (15) aufweist,
und/oder
c) die Spenderbandbereitstellungseinrichtung (10) mehrere, vorzugsweise zwei, zueinander parallel und voneinander beabstandet angeordnete Spenderbänder (15) aufweist,
und/oder
d) die Spenderbandbereitstellungseinrichtung (10) eine Vorratsrolle (13) und eine Aufnahmerolle (14), auf die das zumindest eine Spenderband (15) aufgewickelte ist, und einen Antriebsmotor (16) zum Antrieb der Aufnahmerolle (14) aufweist.

13. Lasertransferdruckvorrichtung (1) nach einem der vorhergehenden Ansprüche,
**dadurch gekennzeichnet, dass**
die Lasertransferdruckvorrichtung (1) mobil oder stationär ist.

14. Lasertransferdruckvorrichtung (1) nach einem der vorhergehenden Ansprüche,
**dadurch gekennzeichnet, dass**
a) die Lasertransferdruckvorrichtung (1) ein Laserhandgerät (3) aufweist, wobei das Laserhandgerät (3) die Spenderbandbereitstellungseinrichtung (10) und die Laserstrahlmanipuliereinrichtung (12) aufweist,
und/oder
b) die Lasertransferdruckvorrichtung (1) eine Laserschutzeinrichtung (34) zur Absorption von Laserstrahlung, aufweist, welche das zu beschichtende Objekt durchdringt, wobei vorzugsweise die Lasertransferdruckvorrichtung (1) so eingerichtet ist, dass der Laserstrahl das zumindest eine Spenderband (15) nur bestrahlt, wenn die ordnungsgemäße Positionierung der Laserschutzeinrichtung (34) von der Steuereinrichtung (8) detektiert ist.

15. Verwendung einer Lasertransferdruckvorrichtung (1) gemäß einem der vorhergehenden Ansprüche zum Beschichten einer Objektoberfläche, vorzugsweise einer Glasoberfläche oder einer Keramikoberfläche, oder einer Metalloberfläche, bevorzugt einer Glastafeloberfläche (26a;b), mittels Lasertransferdruck,
wobei vorzugsweise die Lasertransferdruckvorrichtung (1) zur Erzeugung einer Vogelschutzstruktur oder zur Erzeugung einer elektronischen Struktur, z.B. einer Alarmschleife oder eines Schalter oder einer elektronischen Struktur eines Heizglases, oder zur Erzeugung von Leiterbahnen oder zur Erzeugung einer Markierung, vorzugsweise einer maschinenlesbaren Markierung, bevorzugt eines maschinenlesbaren Codes, bevorzugt eines Data-Matrix-Codes (DCM) oder eines Barcodes oder eines QR Codes, oder zur Erzeugung einer biozid wirkenden Glastafeloberfläche (26a;b) verwendet wird.

16. Verfahren zum Beschichten einer Objektoberfläche, vorzugsweise einer Glasoberfläche, oder einer Keramikoberfläche, oder einer Metalloberfläche, bevorzugt einer Glastafeloberfläche (26a;b), mittels Lasertransferdruck,
**dadurch gekennzeichnet, dass**
das Beschichten mittels einer Lasertransferdruckvorrichtung (1) gemäß einem der Ansprüche 1 bis 14 durchgeführt wird.

## Claims

1. Laser transfer printing device (1) for coating an object surface, preferably a glass surface or a ceramic surface, or a metal surface, preferably a glass panel surface (26a;b), by means of laser transfer printing, comprising
a) a dispenser tape supply device (10) for supplying at least one dispenser tape (15) having a dispenser tape coating with a dispenser tape pressure device (11), wherein the dispenser tape pressure device (11) comprises a pressure element (30) comprising a pressure surface (30a) for pressing the at least one dispenser tape (15) against the object surface, wherein the pressure element (30) comprises at least one laser aperture (36) for guiding the laser radiation through the pressure element (30), wherein the laser aperture (36) comprises a pressure chamber (46) open at the pressure surface (30a),
b) a laser radiation source (2),
c) a laser beam manipulating device (12) for manipulating the laser beam provided by the laser beam source (2), and
d) a control device (8),
**characterized in that**
the laser transfer printing device (1) comprises a compressed air charging device (45) for charging the pressure chamber (46) with compressed air, wherein the compressed air charging device (45) comprises at least one pressure chamber pressure sensor (50), which is connected to the control device (8), for measuring the pressure prevailing in the pressure chamber (46),
and the compressed air charging device (45) comprises at least one ambient pressure sensor (51) connected to the control device (8) for measuring the ambient pressure,
and the laser transfer printing device (1) is set up such that the laser beam only irradiates the at least one dispenser tape (15) when a predetermined target differential pressure between the ambient pressure and the pressure in the at least one pressure chamber (46) is detected by the control device (8).

2. Laser transfer printing device (1) for coating an object surface, preferably a glass surface or a ceramic surface, or a metal surface, preferably a glass panel surface (26a;b), by means of laser transfer printing, comprising
a) a dispenser tape supply device (10) for supplying at least one dispenser tape (15) having a dispenser tape coating with a dispenser tape pressure device (11), wherein the dispenser tape pressure device (11) comprises a pressure element (30) having a pressure surface (30a) for pressing the at least one dispenser tape (15) against the object surface, wherein the pressure element (30) comprises at least one laser aperture (36) for guiding the laser radiation through the pressure element (30), wherein the laser aperture (36) comprises a pressure chamber (46) open at the pressure surface (30a),
b) a laser radiation source (2),
c) a laser beam manipulating device (12) for manipulating the laser beam provided by the laser beam source (2), and
d) a control device (8),
**characterized in that**
the laser transfer printing device (1) comprises a compressed air charging device (45) for charging the pressure chamber (46) with compressed air, wherein the compressed air charging device (45) comprises at least one pressure chamber pressure sensor (50), which is connected to the control device (8), for measuring the pressure prevailing in the pressure chamber (46),
and the laser transfer printing device (1) is set up such that the laser beam only irradiates the at least one dispenser tape (15) when a predetermined target pressure in the at least one pressure chamber (46) is detected by the control device (8).

3. Laser transfer printing device (1) according to claim 1 or 2,
**characterized in that**
the at least one laser aperture (36) is sealed in a gas-tight manner at its end facing away from the object surface to be coated,
wherein preferably the dispenser tape pressure device (11) comprises a sealing plate (37) which bears against a pressure element surface (30b) opposite the pressure surface (30a) and is connected, in particular bonded, thereto in a gas-tight manner, wherein the sealing plate (37) consists of a material which is permeable to laser radiation or which does not absorb the wavelength of the laser radiation, preferably of quartz glass.

4. Laser transfer printing device (1) according to one of the preceding claims,
**characterized in that**
a) the pressure element (30) comprises several, preferably two to six, preferably two to four, laser apertures (36), and the pressure chambers (46) of the laser apertures (36) are fluidically connected to one another,
and/or
b) the laser apertures (36) respectively comprise a laser aperture central axis (36a), which is preferably parallel to an optical z-axis (24) of the laser scan head (22), wherein at least one of the laser aperture central axes (36a) is offset with respect to the optical z-axis (24).

5. Laser transfer printing device (1) according to claim 4,
**characterized in that**
the laser apertures (36) are each conical in the direction of the laser aperture central axes (36a) and taper towards the pressure surface (30a).

6. Laser transfer printing device (1) according to one of the preceding claims,
**characterized in that**
a) the pressure chamber pressure sensor (50) is arranged outside the at least one pressure chamber (46) and is fluidically connected to the at least one pressure chamber (46),
and/or
b) the at least one dispenser tape (15) is guided along the pressure surface (30a), wherein the coated side of the dispenser tape (15) faces away from the pressure surface (30a) and the dispenser tape (15) covers at least one, preferably several, laser apertures (36),
and/or
c) the pressure element (30) is mounted so as to be displaceable back and forth in a z-direction and preferably resiliently on a bearing frame (38) of the laser hand-held device (3).

7. Laser transfer printing device (1) according to one of the preceding claims,
**characterized in that**
a) the at least one pressure chamber (46) comprises a volume of 125 mm³ to 72,000 mm³, preferably 900 to 20,000 mm³,
and/or
b) the at least one laser aperture (36) comprises a quadrangular or circular cross-section.

8. Laser transfer printing device (1) according to one of the preceding claims,
**characterized in that**
the laser beam manipulating device (12) comprises a laser beam blocking device, preferably a laser shutter (21), for blocking the laser beam, and preferably
a) the laser transfer printing device (1) is set up such that the laser shutter (21) only releases the laser beam if the predetermined target differential pressure between the ambient pressure and the pressure in the at least one pressure chamber (46) is detected by means of the pressure sensors (50;51),
or
b) the laser transfer printing device (1) is set up such that the laser shutter (21) only releases the laser beam if the predetermined target pressure in the at least one pressure chamber (46) is detected by means of the at least one pressure chamber pressure sensor (50).

9. Laser transfer printing device (1) according to claim 8,
**characterized in that**
the laser shutter (21) comprises a blocking element, in particular a blocking plate, which can be brought into the beam path of the laser beam, in particular can be swiveled in, and can be brought out of the beam path of the laser beam, in particular can be swiveled out.

10. Laser transfer printing device (1) according to any one of claims 1 to 7,
**characterized in that**
a) the laser transfer printing device (1) is set up in such a way that the laser radiation source (2) can only be started and/or operated if if the predetermined target differential pressure between ambient pressure and pressure in the at least one pressure chamber (46) is detected by means of the pressure sensors (50;51),
or
b) the laser transfer printing device (1) is set up in such a way that the laser radiation source (2) can only be started and/or operated if the predetermined target pressure in the at least one pressure chamber (46) is detected by means of the at least one pressure chamber pressure sensor (50).

11. Laser transferprinting device (1) according to one of the preceding claims,
**characterized in that**
the laser beam manipulator (12) comprises a laser scan head (22) having a scanning device for moving the laser beam in a scan field in an x and y direction, wherein the scanning device preferably comprises scan optics for moving the laser beam in the scan field,
wherein preferably the laser scan head (22) comprises an objective (25) following the scanning device.

12. Laser transfer printing device (1) according to one of the preceding claims,
**characterized in that**
a) the dispenser tape coating comprises at least one metallic and/or at least one ceramic layer, preferably a ceramic layer,
and/or
b) the dispenser tape pressure device (11) comprises two alignment rollers (33), each of which comprises two spaced-apart guide grooves (41) for respectively positively receiving a dispenser tape (15),
and/or
c) the dispenser tape supply device (10) comprises several, preferably two, dispenser tapes (15) arranged parallel to and spaced apart from one another,
and/or
d) the dispenser tape supply device (10) comprises a storage roller (13) and a pick-up roller (14), on which the at least one dispenser tape (15) is wound, and a drive motor (16) for driving the pick-up roller (14).

13. Laser transfer printing device (1) according to one of the preceding claims,
**characterized in that**
the laser transfer printing device (1) is mobile or stationary.

14. Laser transfer printing device (1) according to one of the preceding claims,
**characterized in that**
a) the laser transfer printing device (1) comprises a laser hand-held device (3), wherein the laser hand-held device (3) comprises the dispenser tape supply device (10) and the laser beam manipulating device (12),
and/or
b) the laser transfer printing device (1) comprises a laser protection device (34) for absorbing laser radiation which penetrates the object to be coated, wherein preferably the laser transfer printing device (1) is set up such that the laser beam only irradiates the at least one dispenser tape (15) if the correct positioning of the laser protection device (34) is detected by the control device (8).

15. Use of a laser transfer printing device (1) according to one of the preceding claims for coating an object surface, preferably a glass surface or a ceramic surface, or a metal surface, preferably a glass panel surface (26a;b), by means of laser transfer printing,
wherein preferably the laser transfer printing device (1) is used to produce a bird protection structure or to produce an electronic structure, e.g. an alarm loop or a switch or an electronic structure of a heating glass, or to produce conductive tracks or to produce a marking, preferably a machine-readable marking, preferably a machine-readable code, preferably a data matrix code (DCM) or a barcode or a QR code, or to produce a biocidal glass panel surface (26a;b).

16. Method for coating an object surface, preferably a glass surface, or a ceramic surface, or a metal surface, preferably a glass panel surface (26a;b), by means of laser transfer printing,
**characterized in that**
coating is carried out by means of a laser transfer printing device (1) according to any one of claims 1 to 14.

## Revendications

1. Dispositif d'impression par transfert laser (1) pour revêtir une surface d'objet, de préférence une surface de verre ou une surface de céramique, ou une surface métallique, de préférence une surface de panneau de verre (26a;b), au moyen d'une impression par transfert laser, présentant
a) un dispositif de préparation de bande de distribution (10) pour la préparation d'au moins une bande de distribution (15) présentant un revêtement de bande de distribution avec un dispositif de pression de bande de distribution (11), où le dispositif de pression de bande de distribution (11) comprend un élément de pression (30) présentant une surface de pression (30a) pour presser la au moins une bande de distribution (15) contre la surface d'objet, où l'élément de pression (30) comprend au moins une ouverture de passage du laser (36) pour faire passer le rayonnement laser à travers l'élément de pression (30), où l'ouverture de passage du laser (36) comprend une chambre de pression (46) ouverte sur la surface de pression (30a),
b) une source de rayonnement laser (2),
c) un dispositif de manipulation du faisceau laser (12) pour manipuler le faisceau laser fourni par la source de rayonnement laser (2), et
d) un dispositif de commande (8),
**caractérisé en ce que**
le dispositif d'impression par transfert laser (1) présente un dispositif d'alimentation en air comprimé (45) pour alimenter la chambre de pression (46) en air comprimé, où le dispositif d'alimentation en air comprimé (45) comprend au moins un capteur de pression de chambre de pression (50) en liaison avec le dispositif de commande (8) pour mesurer la pression régnant dans la chambre de pression (46),
et le dispositif d'alimentation en air comprimé (45) présente au moins un capteur de pression ambiante (51) en liaison avec le dispositif de commande (8) pour mesurer la pression ambiante,
et le dispositif d'impression par transfert laser (1) est conçu de telle sorte que le faisceau laser n'irradie l'au moins une bande de distribution (15) que lorsqu'une pression différentielle définie prédéterminée entre la pression ambiante et la pression dans l'au moins une chambre de pression (46) est détectée par le dispositif de commande (8).

2. Dispositif d'impression par transfert laser (1) pour revêtir une surface d'objet, de préférence une surface de verre ou une surface de céramique, ou une surface métallique, de préférence une surface de panneau de verre (26a;b), au moyen d'une impression par transfert laser, présentant
a) un dispositif de préparation de bande de distribution (10) pour la préparation d'au moins une bande de distribution (15) présentant un revêtement de bande de distribution avec un dispositif de pression de bande de distribution (11), où le dispositif de pression de bande de distribution (11) comprend un élément de pression (30) présentant une surface de pression (30a) pour presser la au moins une bande de distribution (15) contre la surface d'objet, où l'élément de pression (30) comprend au moins une ouverture de passage du laser (36) pour faire passer le rayonnement laser à travers l'élément de pression (30), où l'ouverture de passage du laser (36) comprend une chambre de pression (46) ouverte sur la surface de pression (30a),
b) une source de rayonnement laser (2),
c) un dispositif de manipulation du faisceau laser (12) pour manipuler le faisceau laser fourni par la source de rayonnement laser (2), et
d) un dispositif de commande (8),
**caractérisé en ce que**
le dispositif d'impression par transfert laser (1) présente un dispositif d'alimentation en air comprimé (45) pour alimenter la chambre de pression (46) en air comprimé, où le dispositif d'alimentation en air comprimé (45) comprend au moins un capteur de pression de chambre de pression (50) en liaison avec le dispositif de commande (8) pour mesurer la pression régnant dans la chambre de pression (46),
et le dispositif d'impression par transfert laser (1) est conçu de telle sorte que le faisceau laser n'irradie l'au moins une bande de distribution (15) que lorsqu'une pression définie prédéterminée dans l'au moins une chambre de pression (46) est détectée par le dispositif de commande (8).

3. Dispositif d'impression par transfert laser (1) selon la revendication 1 ou 2,
**caractérisé en ce que**
l'au moins une ouverture de passage du laser (36) est fermée de manière étanche aux gaz à son extrémité opposée à la surface d'objet à revêtir, où de préférence le dispositif de pression de bande de distributeur (11) comprend une plaque d'étanchéité (37) qui s'applique contre une surface d'élément de pression (30b) opposée à la surface de pression (30a) et qui est reliée à celle-ci de manière étanche au gaz, en particulier collée, où la plaque d'étanchéité (37) est constituée d'un matériau qui est transparent au rayonnement laser ou qui n'absorbe pas la longueur d'onde du rayonnement laser, de préférence de verre de quartz.

4. Dispositif d'impression par transfert laser (1) selon l'une des revendications précédentes,
**caractérisé en ce que**
a) l'élément de pression (30) présente plusieurs ouvertures de passage du laser (36), de préférence deux à six, de préférence deux à quatre, et les chambres de pression (46) des ouvertures de passage du laser (36) sont reliées entre elles fluidiquement,
et/ou
b) les ouvertures de passage du laser (36) présentent chacune un axe central d'ouverture de passage du laser (36a), qui est de préférence parallèle à un axe optique z (24) de la tête de scannage laser (22), où au moins l'un des axes centraux d'ouverture de passage du laser (36a) est décalé par rapport à l'axe optique z (24).

5. Dispositif d'impression par transfert laser (1) selon la revendication 4,
**caractérisé en ce que**
les ouvertures de passage du laser (36) sont respectivement de forme conique dans la direction des axes centraux des ouvertures de passage du laser (36a) et se rétrécissent en direction de la surface de pression (30a).

6. Dispositif d'impression par transfert laser (1) selon l'une des revendications précédentes,
**caractérisé en ce que**
a) le capteur de pression de chambre de pression (50) est disposé à l'extérieur de ladite au moins une chambre de pression (46) et est relié fluidiquement à ladite au moins une chambre de pression (46),
et/ou
b) l'au moins une bande de distribution (15) est guidée le long de la surface de pression (30a), où le côté revêtu de la bande de distribution (15) est orienté à l'opposé de la surface de pression (30a) et la bande de distribution (15) recouvre au moins une, de préférence plusieurs, ouvertures de passage du laser (36),
et/ou
c) l'élément de pression (30) est monté sur un cadre de support (38) de l'appareil manuel à laser (3) de manière déplaçable en va-et-vient dans une direction z et de préférence de manière élastique.

7. Dispositif d'impression par transfert laser (1) selon l'une des revendications précédentes,
**caractérisé en ce que**
a) la au moins une chambre de pression (46) présente un volume de 125 mm³ à 72 000 mm³, de préférence de 900 à 20 000 mm³,
et/ou
b) l'au moins une ouverture de passage du laser (36) présente une section transversale quadrangulaire ou circulaire.

8. Dispositif d'impression par transfert laser (1) selon l'une des revendications précédentes,
**caractérisé en ce que**
le dispositif de manipulation du faisceau laser (12) présente un dispositif de blocage du faisceau laser, de préférence un obturateur laser (21), pour bloquer le faisceau laser, et de préférence
a) le dispositif d'impression par transfert laser (1) est conçu de telle sorte que l'obturateur laser (21) ne libère le faisceau laser que lorsque la pression différentielle définie prédéterminée entre la pression ambiante et la pression dans la au moins une chambre de pression (46) est détectée au moyen des capteurs de pression (50;51),
ou
b) le dispositif d'impression par transfert laser (1) est conçu de telle sorte que l'obturateur laser (21) ne libère le faisceau laser que si la pression définie prédéterminée est détectée dans la au moins une chambre de pression (46) au moyen du au moins un capteur de pression de chambre de pression (50).

9. Dispositif d'impression par transfert laser (1) selon la revendication 8,
**caractérisé en ce que**
l'obturateur laser (21) présente un élément de blocage, en particulier une plaque de blocage, qui peut être amené, en particulier peut être pivoté, dans le trajet du faisceau laser, et peut être amené, en particulier peut être pivoté, hors du trajet du faisceau laser.

10. Dispositif d'impression par transfert laser (1) selon l'une des revendications 1 à 7,
**caractérisé en ce que**
a) le dispositif d'impression par transfert laser (1) est conçu de telle sorte que la source de rayonnement laser (2) ne peut être mise en marche et/ou opérée que si, au moyen des capteurs de pression (50;51), la pression différentielle définie prédéterminée entre la pression ambiante et la pression dans la au moins une chambre de pression (46) est détectée,
ou
b) le dispositif d'impression par transfert laser (1) est conçu de telle sorte que la source de rayonnement laser (2) ne peut être mise en marche et/ou opérée que si la pression définie prédéterminée est détectée dans la au moins une chambre de pression (46) au moyen du au moins un capteur de pression de chambre de pression (50).

11. Dispositif d'impression par transfert laser (1) selon l'une des revendications précédentes,
**caractérisé en ce que**
le dispositif de manipulation de faisceau laser (12) comprend une tête de scannage laser (22) qui comprend un dispositif de scannage pour déplacer le faisceau laser dans un champ de scannage dans une direction x et y, où le dispositif de scannage comprend de préférence une optique de scannage pour déplacer le faisceau laser dans le champ de scannage, où la tête de scannage laser (22) comprend de préférence un objectif (25) se raccordant au dispositif de scannage.

12. Dispositif d'impression par transfert laser (1) selon l'une quelconque des revendications précédentes,
**caractérisé en ce que**
a) Le revêtement de la bande de distribution comprend au moins une couche métallique et/ou au moins une couche céramique, de préférence une couche céramique,
et/ou
b) le dispositif de pression de la bande de distribution (11) présente deux rouleaux d'alignement (33), qui présentent chacun deux rainures de guidage (41) espacées l'une de l'autre pour recevoir respectivement une bande de distribution (15) par complémentarité de forme,
et/ou
c) le dispositif de préparation de bande de distribution (10) présente plusieurs bandes de distribution (15), de préférence deux, disposées parallèlement et à distance l'une de l'autre,
et/ou
d) le dispositif de préparation de bande de distribution (10) présente un rouleau de réserve (13) et un rouleau de réception (14) sur lequel est enroulée la au moins une bande de distribution (15), et un moteur d'entraînement (16) pour entraîner le rouleau de réception (14).

13. Dispositif d'impression par transfert laser (1) selon l'une quelconque des revendications précédentes,
**caractérisé en ce que**
le dispositif d'impression par transfert laser (1) est mobile ou fixe.

14. Dispositif d'impression par transfert laser (1) selon l'une des revendications précédentes,
**caractérisé en ce que**
a) le dispositif d'impression par transfert laser (1) comprend un appareil portatif laser (3), où l'appareil portatif laser (3) comprend le dispositif de préparation de bande de distribution (10) et le dispositif de manipulation du faisceau laser (12),
et/ou
b) le dispositif d'impression par transfert laser (1) comprend un dispositif de protection laser (34) destiné à absorber le rayonnement laser, qui traverse l'objet à revêtir, où le dispositif d'impression par transfert laser (1) est de préférence conçu de telle sorte que le faisceau laser n'irradie l'au moins une bande de distribution (15) que si le positionnement correct du dispositif de protection laser (34) est détecté par le dispositif de commande (8).

15. Utilisation d'un dispositif d'impression par transfert laser (1) selon l'une des revendications précédentes pour revêtir une surface d'objet, de préférence une surface de verre ou une surface de céramique, ou une surface métallique, de préférence une surface de panneau de verre (26a;b), par impression par transfert laser,
où, de préférence, le dispositif d'impression par transfert laser (1) est utilisé pour produire une structure de protection des oiseaux ou pour produire une structure électronique, par exemple une boucle d'alarme ou un interrupteur ou une structure électronique d'un verre chauffant, ou pour produire des pistes conductrices ou pour produire un marquage, de préférence un marquage lisible par une machine, de préférence un code lisible par une machine, de préférence un code Data Matrix (DCM) ou un code à barres ou un code QR, ou pour produire une surface de panneau de verre à effet biocide (26a;b).

16. Procédé de revêtement d'une surface d'objet, de préférence une surface de verre, ou une surface de céramique, ou une surface métallique, de préférence une surface de panneau de verre (26a;b), au moyen d'une impression par transfert laser,
**caractérisé en ce que**
le revêtement est effectué au moyen d'un dispositif d'impression par transfert laser (1) selon l'une quelconque des revendications 1 à 14.
